# EUROPEAN PATENT SPECIFICATION

(11) **EP 3 894 493 B1**
(45) Date of publication and mention of the grant of the patent: **29.06.2022**
(21) Application number: 20701597.5
(22) Date of filing: 22.01.2020
(51) Int. Cl.: C09D 183/04, C09J 7/40

(54) **OIL-IN-WATER SILICONE EMULSION COMPOSITION FOR RELEASE FILM, RELEASE FILM AND METHOD FOR PRODUCING RELEASE FILM, AND METHOD FOR ADJUSTING COATING PROPERTIES AND RELEASE PROPERTIES OF RELEASE FILM**
ÖL-IN-WASSER-SILIKON-EMULSIONSZUSAMMENSETZUNG FÜR TRENNFOLIE, TRENNFOLIE UND VERFAHREN ZUR HERSTELLUNG EINER TRENNFOLIE SOWIE VERFAHREN ZUR ANPASSUNG VON BESCHICHTUNGSEIGENSCHAFTEN UND TRENNEIGENSCHAFTEN EINER TRENNFOLIE
COMPOSITION D'ÉMULSION DE SILICONE HUILE-DANS-L'EAU POUR FILM ANTIADHÉSIF, FILM ANTIADHÉSIF ET PROCÉDÉ DE FABRICATION D'UN FILM ANTIADHÉSIF, ET PROCÉDÉ DE RÉGLAGE DES PROPRIÉTÉS DE REVÊTEMENT ET DES PROPRIÉTÉS ANTIADHÉSIVES D'UN FILM ANTIADHÉSIF

(30) Priority: 27.02.2019 JP 2019035014
(43) Date of publication of application: 20.10.2021
(73) Proprietor: Wacker Chemie AG, 81737 München (DE)
(72) Inventor: HORI, Yoko, Chikusei-shi, Ibaraki 300--4522 (JP)
(74) Representative: Mieskes, Klaus Theoderich
(86) International application number: PCT/EP2020/051488
(87) International publication number: WO 2020/173622

(56) References cited:
- EP-A1- 2 444 463
- US-A1- 2018 094 178

## Description

### TECHNICAL FIELD

The present invention relates to an oil-in-water silicone emulsion composition for a release film of a multilayer ceramic capacitor (MLCC), a semiconductor interlayer insulating film, a capacitor film, or a thermal conduction film.

### BACKGROUND ART

For prevention of adhesion and fixing of a coating substance onto a film such as a plastics, a method for imparting release properties to a film substrate by forming a release agent layer of a release agent containing silicone on a surface of the film substrate is known. Herein, the release agent containing silicone is not a release agent that is applied to impart releasability to a die used at high temperature and high pressure, but a release agent that is applied to impart release properties to a film required to have release properties at normal temperature and normal pressure, such as a film for a seal mount or a film for production of ceramic slurry. In general, a film having a surface on which a release agent layer is formed to impart release properties at normal temperature and normal pressure is referred to as a release film. The release agent layer formed in this release film is formed by an addition reaction or a condensation reaction that is promoted by a component contained in the release agent.

The release agent containing silicone can be classified broadly into three types: a solvent-containing release agent in which silicone is dissolved in an organic solvent; an emulsion release agent in which silicone is dispersed in water with an emulsifier; and a solventless release agent in which only silicone is contained. The solvent-containing release agent is harmful to the human body and the environment, which is disadvantageous. Therefore, from the viewpoint of safety, use of the emulsion release agent or the solventless release agent is increased instead. In particular, the emulsion release agent has excellent applicability in which another aqueous material or an emulsion can be optionally mixed, in addition to safety, and therefore future expansion of use thereof is expected.

In recent years, the size, thickness, and weight of various electronic devices have been decreased, and use of multilayer structure has been increased. Therefore, during production of the devices, a release film is often required. This is because in a process of producing a light, thin, and small electronic device having a multilayer structure, a step is often used in which on a surface (hereinafter sometimes referred to as a release surface) on a side opposite to a contact surface of a release agent layer of a release film with a film substrate, a film formed from another material is layered and then released in a downstream process, or another material (hereinafter sometimes referred to as a coating material) is applied to the release surface and dried, and the dried material is then released in a downstream process. The step in which the coating material is applied to the release surface and dried, and the dried material is released in a downstream process is especially frequently used during production of the light, thin, and small electronic device having a multilayer structure. For example, a process of producing a multilayer ceramic capacitor (MLCC) requires a step in which a ceramic slurry as a coating material is applied to the release surface, dried, and then released. Use of a polar coating material such as a ceramic slurry is increased, and a thinner layer of the coating material is formed due to a decrease in size, thickness, and weight of various electronic devices and use of multilayer structure in recent years. Therefore, it is necessary that this step be performed even when the polar coating material is thinly applied to the release film (so that the thickness is on the order of several nanometers to micrometers), dried, and then released.

Regardless of a case of MLCC, use applications that requires formation of a polar thin film such as a semiconductor interlayer insulating film, a capacitor film, or a thermal conduction film on a silicone film or the like is increased. Therefore, it is similarly necessary that the aforementioned step be performed.

As a release agent used for such a release film, the release agent containing silicone is suitably used from the viewpoint of imparting excellent release properties to the release film. The emulsion release agent is more preferably used since the emulsion release agent has more advantages in safety and applicability than those of the solvent-containing release agent and the solventless release agent.

However, the emulsion release agent such as a release agent containing a silicone emulsion currently has the following technical problem.

The surface of a release agent layer formed from the release agent containing a silicone emulsion inherently tends to repel a substance on the release surface since the surface tension is low due to an organopolysiloxane. That is, the surface often inhibits favorable release properties. However, due to the low surface tension, a coating material is less likely to be applied to the release surface, and in particular, it is difficult that a high polar coating material is thinly applied without repelling. When the surface tension on the release surface is increased in some way in order to thinly apply a coating material without repelling, the applying of the coating material tends to be facilitated. However, the release properties tend to deteriorate. This means that when the surface tension is increased to achieve favorable coating properties, poor release such as cracking or rupture may occur during release of the thinly applied coating material after drying from the release film. There is a relationship where when release properties inherent in the release agent containing a silicone emulsion are sought to release not only the high polar coating material that has been thinly applied to the release surface, but also various coating materials that have been applied to the release surface without repelling and dried, without poor release, the coating properties are sacrificed (or there is a reverse relationship). This is a current technical problem of the release agent containing a silicone emulsion.

Herein, favorable coating properties mean the properties of the release surface in which a coating material is uniformly applied to the release surface without repelling and a pinhole does not occur after drying the coating material. Appropriate release properties mean the properties of the release surface in which a dried substance obtained from the coating material on the release surface can be released from the release surface without cracking and rupture.

On the other hand, Patent Literature 1 discloses an oil-in-water silicone emulsion composition for a release film and a release film having a release agent layer that is formed by applying the composition to a surface. However, a substantial purpose in Patent Literature 1 is to prevent occurrence of a pinhole or a void in a coating material, and Patent Literature 1 only describes that generation of protrusion formed from the silicone emulsion composition on a release surface of the release agent layer is suppressed and the size of the protrusion is decreased. Patent Literature 1 does not describe a relationship between the coating properties and the release properties that is to be solved even when a polar coating material is thinly applied, at all.

Patent Literature 2 discloses a release film that has favorable coating properties with respect to a release surface of a release agent layer even when a ceramic slurry as a polar coating material is thinly applied, and imparts to the release surface such properties that achieve appropriate release properties from the release surface. Further, Patent Literature 2 discloses a composition including a melamine resin and an organopolysiloxane as suitable release agents.

However, Patent Literature 2 has the following technical problems.

First, Patent Literature 2 discloses a method for optimizing the coating properties and release properties of the coating material using the surface free energy of the release film as a parameter, and the upper limit value (30 mJ/m²) and lower limit value (25 mJ/m²) of the surface free energy. However, a relationship between the coating properties and the release properties is a relationship in which when the coating properties or the release properties are enhanced, the other properties are deteriorated. Although both the properties can be optimized to some degree, both the properties cannot be preferable values simultaneously. The coating properties and the release properties cannot be adjusted each independently.

Secondly, Patent Literature 2 describes that the storage elastic modulus of the release film is used as a parameter to affect releasability, and this indirectly affects the coating properties. Further, Patent Literature 2 discloses the upper limit value and lower limit value of the storage elastic modulus. Patent Literature 2 describes that the storage elastic modulus is affected by introduction of a melamine resin. However, an action in which the storage elastic modulus affects the coating properties and the releasability is not clear. It is not clear how two parameters that are the surface free energy and the storage elastic modulus are involved and how the two parameters determine the release properties and the coating properties.

Thirdly, Patent Literature 2 discloses that in order to exert favorable coating properties and appropriate release properties of the coating material, it is suitable that the release agent layer has a graded structure in which the composition ratio of silicone to a melamine resin is graded in a film thickness direction. However, it is not clear how the graded structure affects the coating properties and the release properties according to the relationship between the two parameters. Further, Patent Literature 2 does not describe a detailed method for forming the graded structure with good reproducibility. Therefore, the reproducibility of the coating properties and release properties to be imparted to the release agent layer is not clear.

Fourthly, the release agent disclosed in Patent Literature 2 is a solvent-containing release agent in which an organopolysiloxane and a melamine resin are certainly dissolved in an organic solvent that is harmful to the human body and the environment.

Fifthly, Patent Literature 2 describes that the coating properties and release properties of the release film can be made favorable and appropriate since the surface free energy and storage elastic modulus of the release agent layer provided on the film each satisfy a predetermined value range. However, although the surface free energy and the storage elastic modulus each satisfy a predetermined value range with reference to Examples described in Patent Literature 2, it is clear that a desired film may not be obtained. Accordingly, setting of the two parameters is not adequate to solve the problems. US 2018/094178 A1 discloses an organopolysiloxane emulsion release film composition comprising an alkenyl diorganopolysiloxane, an organohydrogenpolysiloxane, a catalyst, a polyether or polyol as surfactant, and an optional MQ resin having alkenyl groups.

### CITATION LIST

### PATENT LITERATURE

Patent Literature 1: Japanese Patent Application Laid-Open No. 2016-180039
Patent Literature 2: WO2016/158592

### SUMMARY OF INVENTION

### TECHNICAL PROBLEM

In any of the conventional techniques, an oil-in-water silicone emulsion composition for a release film that can keep the release properties inherent in silicone and achieve the coating properties of a high polar coating material even when the coating material is thinly applied, and a release film in which the composition has been applied are not disclosed.

In the conventional techniques, attention is not necessarily paid to a factor adequate to adjust the coating properties and release properties of the release film. Therefore, it is necessary that a technology for adjusting the coating properties with respect to a release surface of a release film and the release properties from the release surface of the release film be disclosed from the viewpoint different from that of the conventional techniques. It is considered that when the coating properties and the release properties can be each independently adjusted by different factors, the relationship in which when the coating properties are sought, the release properties are deteriorated can be completely solved, and the coating properties and the release properties are easily sought. However, the conventional techniques do not disclose such an adjustment method.

In view of the circumstances, the present invention provides an oil-in-water silicone emulsion composition for a release film that can keep the release properties inherent in silicone and achieve the coating properties of a high polar coating material even when the coating material is thinly applied, and a release film in which the composition has been applied.

In view of the circumstances, the present invention provides a release film in which the coating properties with respect to a release surface and the release properties from the release surface are adjusted so that favorable coating properties with respect to the release surface and appropriate release properties from the release surface can be simultaneously achieved without largely deteriorating the coating properties and the release properties.

In view of the circumstances, the present invention provides a method for producing a release film in which the coating properties with respect to the release surface and the release properties from the release surface are adjusted so that favorable coating properties with respect to the release surface and appropriate release properties from the release surface can be simultaneously achieved without largely deteriorating the coating properties and the release properties.

In view of the circumstances, the present invention provides a method for adjusting and optimizing the coating properties of a high polar coating material with respect to the release surface of the release film even when the coating material is thinly applied.

In view of the circumstances, the present invention provides a method for adjusting and optimizing the coating properties of a coating material with respect to the release surface of the release film and the release properties from the release surface each independently.

### SOLUTION TO PROBLEM

The inventors of the present invention have found an oil-in-water silicone emulsion composition containing an M unit and a Q unit, and optionally containing a T unit to provide an oil-in-water silicone emulsion composition for a release film that can keep the release properties inherent in silicone and achieve the coating properties of a high polar coating material even when the coating material is thinly applied, and also provide a release film in which the composition has been applied.

Further, the inventors have found a release film in which a release agent composition containing a component having an M unit and a Q unit and a component having a methyl group has been applied to provide a release film that can adjust the coating properties with respect to a release surface and the release properties from the release surface so that favorable coating properties with respect to the release surface and appropriate release properties from the release surface can be simultaneously achieved within ranges corresponding to targeted levels without largely deteriorating the coating properties and the release properties.

The targeted level herein means a degree required for the coating properties or the release properties in various types of uses such as MLCC, a semiconductor interlayer insulating film, a capacitor film, a thermal conduction film, and the like.

The inventors have found a method for producing the release film in which the release agent composition containing a component having an M unit and a Q unit and a component having a methyl group has been applied to adjust the coating properties with respect to the release surface and the release properties from the release surface so that favorable coating properties with respect to the release surface and appropriate release properties from the release surface can be simultaneously achieved within the ranges corresponding to the targeted levels without largely deteriorating the coating properties and the release properties.

The inventors have found that the coating properties with respect to the release surface in the release film in which the release agent composition has been applied is adjusted by the density of siloxane bond in a release layer formed from the release agent composition to provide a method for adjusting and optimizing the coating properties of a coating material with respect to the release surface in the release film.

Further, the inventors have found that the coating properties with respect to the release surface in the release film in which the release agent composition has been applied is adjusted by the density of siloxane bond in the release layer formed from the release agent composition and the release properties from the release surface in the release film in which the release agent composition has been applied is adjusted by the amount of methyl group in the release layer formed from the release agent composition to provide a method for adjusting and optimizing the coating properties of a coating material with respect to the release surface of the release film and the release properties from the release surface of the release film each independently.

That is, an oil-in-water silicone emulsion composition for a release film of a multilayer ceramic capacitor (MLCC), a semiconductor interlayer insulating film, a capacitor film, or a thermal conduction film according to the present invention is an oil-in-water silicone emulsion composition for a release film containing components (A) to (E):
a component (A): 20 to 60 parts by mass of an organopolysiloxane resin that has an average composition formula represented by the general formula (1), and contains 1 to 5% by mole of an alkenyl group bonded to a silicon atom, 10 to 90% by mole of an M unit represented by the general formula (2), 0 to 90% by mole of a T unit represented by the general formula (3), and 5 to 90% by mole of a Q unit represented by the general formula (4), and in which the molar ratio M/Q of the M unit to the Q unit is 0.1 to 4 and the molar ratio T/Q of the T unit to the Q unit is 0 to 1,000,

   [Chemical formula 1] R¹ₐR²_{b}SiO_{(4-a-b)/2} (1)

   (wherein R¹ is the same or different monovalent hydrocarbon group containing no aliphatic unsaturated group, R² is an alkenyl group, a is 0.999 to 2.999, b is 0.001 to 2, and a + b is 1 to 3) 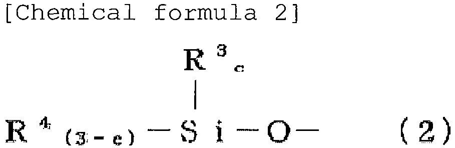 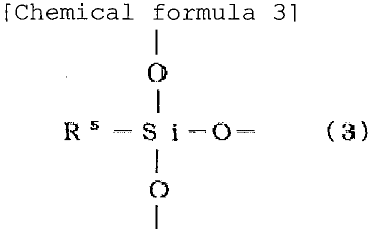 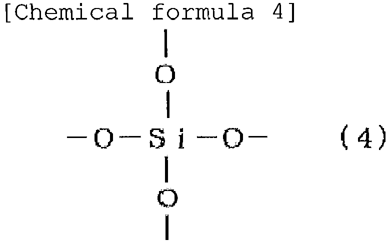 (wherein R³ is independently a substituted or unsubstituted monovalent hydrocarbon group having 1 to 20 carbon atoms and no aliphatic unsaturated bond, R⁴ is independently a substituted or unsubstituted alkenyl group having 2 to 20 carbon atoms, R⁵ is a substituted or unsubstituted alkenyl group having 1 to 20 carbon atoms, and c is an integer of 0 to 3.);
a component (B): 5 to 30 parts by mass of an organohydrogenpolysiloxane that has an average composition formula represented by the general formula (5), and contains two or more hydrogen atoms bonded to silicon atoms (the amount in parts by mass is represented when the whole mass of the composition is 100 parts by mass, and hereinafter, the amount of each component is represented in the same manner),

   [Chemical formula 5] R⁶_{d}HₑSiO_{(4-d-e)/2} (5)

   (wherein R⁶ is the same or different monovalent hydrocarbon group containing no aliphatic unsaturated group, d is 0.999 to 2.999, e is 0.001 to 2, and d + e is 1 to 3);
a component (C): 1 to 10 parts by mass of a nonionic surfactant;
a component (D): 1 to 500 ppm of a platinum-based catalyst relative to the amount of the component (A); and
a component (E): 30 to 80 parts by mass of water, wherein the content of the methyl group in the solid content in this release agent composition is 5% by mass or more, wherein the content of the methyl group is a calculated value based on the amount of used raw material of the composition.

The release film according to the present invention is a release film in which the foregoing oil-in-water silicone emulsion composition for a release film has been applied.

The release film according to the present invention is a release film in which a release agent composition has been applied. The release agent composition contains a component having an M unit represented by the general formula (2) and a Q unit represented by the general formula (4), and a component having a methyl group: 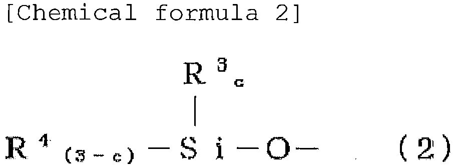 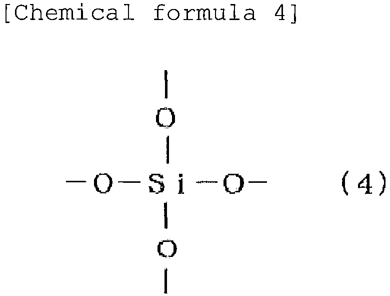 (wherein R³ is independently a substituted or unsubstituted monovalent hydrocarbon group having 1 to 20 carbon atoms and no aliphatic unsaturated bond, and R⁴ is independently a substituted or unsubstituted alkenyl group having 2 to 20 carbon atoms), and
the release film is a release film in which the coating properties with respect to a release surface of the release film are adjusted by the molar ratio of the M unit to the Q unit in the component having the M unit and the Q unit and the release properties from the release surface of the release film are adjusted by the content of the methyl group contained in the component having the methyl group in the film.

A method for producing a release film according to the present invention is a method for producing the release film in which a release agent composition has been applied. In the method, the release agent composition contains a component having an M unit represented by the general formula (2) and a Q unit represented by the general formula (4), and a component having a methyl group: 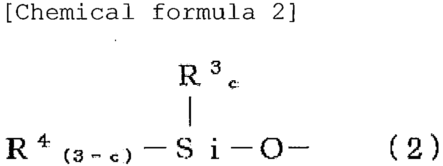 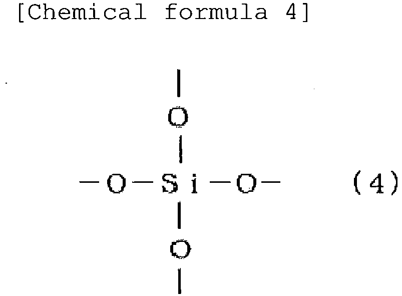 (wherein R³ is independently a substituted or unsubstituted monovalent hydrocarbon group having 1 to 20 carbon atoms and no aliphatic unsaturated bond, and R⁴ is independently a substituted or unsubstituted alkenyl group having 2 to 20 carbon atoms), and
the coating properties with respect to the release surface of the release film are adjusted by the molar ratio of the M unit to the Q unit in the component having the M unit and the Q unit, and the release properties from the release surface of the release film are adjusted by the content of the methyl group contained in the component having a methyl group in the film.

A method for adjusting the coating properties with respect to the release surface according to the present invention is a method for adjusting the coating properties with respect to the release surface of the release film in which the release agent composition has been applied including adjusting the coating properties with respect to the release surface of the release film in which the release agent composition has been applied by the density of siloxane bond in a release layer formed from the release agent composition.

A method for adjusting the coating properties with respect to the release surface and the release properties from the release surface according to the present invention is a method for adjusting the coating properties with respect to the release surface of the release film in which the release agent composition has been applied and the release properties from the release surface of the release film including adjusting the coating properties by the density of siloxane bond in a release layer formed from the release agent composition and adjusting the release properties by the content of a methyl group in the release layer formed from the release agent composition. Operations of Invention

The oil-in-water silicone emulsion composition for a release film provided by the present invention is an oil-in-water silicone emulsion composition for a release film containing components (A) to (E):
a component (A): 20 to 60 parts by mass of an organopolysiloxane resin that has an average composition formula represented by the foregoing general formula (1), and contains 1 to 5% by mole of an alkenyl group bonded to a silicon atom, 10 to 90% by mole of an M unit represented by the foregoing general formula (2), 0 to 90% by mole of a T unit represented by the foregoing general formula (3), and 5 to 90% by mole of a Q unit represented by the foregoing general formula (4), and in which the molar ratio M/Q of the M unit to the Q unit is 0.1 to 4 and the molar ratio T/Q of the T unit to the Q unit is 0 to 1,000);
the component (B): 5 to 30 parts by mass of an organohydrogenpolysiloxane that has an average composition formula represented by the foregoing general formula (5), and contains two or more hydrogen atoms bonded to silicon atoms;
the component (C): 1 to 10 parts by mass of a nonionic surfactant;
the component (D): 1 to 500 ppm of a platinum-based catalyst relative to the amount of the component (A); and the component (E): 30 to 80 parts by mass of water,
wherein the content of the methyl group in the solid content in this release agent composition is 5% by mass or more, wherein the content of the methyl group is a calculated value based on the amount of used raw material of the composition.

Therefore, even when a high polar coating material is thinly applied, favorable coating properties can be obtained by an appropriate M/Q molar ratio, and favorable release properties can be obtained by an appropriate amount of methyl group. Since a composition adequate to form a film is used, an oil-in-water silicone emulsion composition for a release film that can keep the release properties inherent in silicone and achieve the coating properties of the coating material, and a release film in which the composition has been applied can be provided.

The release film provided by the present invention is a release film in which a release agent composition has been applied. The release agent composition contains a component having an M unit and a Q unit, and a component having a methyl group. When the molar ratio of the M unit to the Q unit in the component having the M unit and the Q unit is adjusted, the siloxane density can be set according to a purpose, to adjust the coating properties with respect to the release surface of the release film. When the content of the methyl group of the component having the methyl group in the film is adjusted, the surface free energy can be set according to a purpose, to adjust the release properties from the release surface of the release film. Accordingly, the release film in which the coating properties with respect to the release surface and the release properties from the release surface are adjusted so that favorable coating properties with respect to the release surface and appropriate release properties from the release surface can be simultaneously achieved within ranges corresponding to targeted levels without largely deteriorating the coating properties and the release properties can be provided.

The method for producing the release film provided by the present invention is a method for producing the release film in which the release agent composition has been applied. The release agent composition contains the component having an M unit and a Q unit, and the component having a methyl group. When the molar ratio of the M unit to the Q unit in the component having the M unit and the Q unit is adjusted, the siloxane density can be set according to a purpose, to adjust the coating properties. When the content of the methyl group of the component having a methyl group in the film is adjusted, the surface free energy can be set according to a purpose, to adjust the release properties from the release surface of the release film. Accordingly, the method for producing the release film including adjusting the coating properties with respect to the release surface and the release properties from the release surface so that favorable coating properties with respect to the release surface and appropriate release properties from the release surface can be simultaneously achieved within ranges corresponding to targeted levels without largely deteriorating the coating properties and the release properties can be provided.

The present invention can provide a method for adjusting the coating properties with respect to the release surface in the release film in which the release agent composition has been applied. The method includes adjusting the coating properties with respect to the release surface of the release film in which the release agent composition has been applied by the density of siloxane bond in the release layer formed from the release agent composition. Therefore, the coating properties can be exerted by an interaction between the polarity of the release film and the polarity of the coating material. Accordingly, even when a high polar coating material is applied in a thin thickness, a method for adjusting and optimizing the coating properties of the coating material with respect to the release surface can be provided.

The present invention can further provide a method for adjusting the coating properties with respect to the release surface of the release film in which the release agent composition has been applied, and the release properties from the release surface. The method includes adjusting the coating properties with respect to the release surface of the release film, in which the release agent composition has been applied, by the density of siloxane bond in the release layer formed from the release agent composition and adjusting the release properties from the release surface of the release film, in which the release agent composition has been applied, by the amount of the methyl group in the release layer formed from the release agent composition. The coating properties are exerted by an action that is different from an action in the interface surface between the release surface and a surface to which the coating material is applied. Accordingly, a method for adjusting and optimizing the coating properties of the coating material with respect to the release surface and the release properties from the release surface each independently can be provided.

### ADVANTAGEOUS EFFECTS OF INVENTION

According to the present invention, the oil-in-water silicone emulsion composition for a release film that can keep the release properties inherent in silicone composition and achieve the coating properties of a high polar coating material with good reproducibility even when the coating material is thinly applied, and a release film in which the composition has been applied to a surface of a substrate such as a plastic film can be provided. A composition and a release film that have little influence on the environment, are easily produced, and have good reproducibility of performance can also be provided.

According to the present invention, the release film in which the coating properties with respect to a release surface and the release properties from the release surface are adjusted so that favorable coating properties with respect to the release surface and appropriate release properties from the release surface can be simultaneously achieved can be provided. In particular, even when the high polar coating material is applied in a thin film thickness, a release performance close to that of a conventional silicone-based release material can be maintained and favorable coating properties can be obtained.

According to the present invention, the method for producing the release film including adjusting the coating properties with respect to the release surface and the release properties from the release surface so that favorable coating properties of the release surface and appropriate release properties from the release surface can be simultaneously achieved can be provided. In particular, even when the high polar coating material is applied in a thin film thickness, a release performance close to that of the conventional silicone-based release material can be maintained and a release film having favorable coating properties can be produced.

According to the present invention, the method for adjusting and optimizing the coating properties can be provided by a method for adjusting the coating properties with respect to the release surface of the release film even when the high polar coating material is applied in a thin film thickness. In particular, on a release film containing silicone as a main component, the coating material can be favorably applied.

According to the present invention, the method for adjusting and optimizing the coating properties and the release properties each independently can be provided by the method for adjusting the coating properties with respect to the release surface of the release film and the release properties from the release surface of the release film. The coating properties and the release properties are each independently adjusted. Therefore, the coating properties and/or the release properties can be freely designed and set according to a purpose without influence on each other.

### DESCRIPTION OF EMBODIMENTS

### <Embodiments of oil-in-water silicone emulsion composition for release film and release film obtained by applying the composition>

Hereinafter, details of an oil-in-water silicone emulsion composition for a release film according to the present invention will be described. The oil-in-water silicone emulsion composition for a release film according to the present invention contains the following components (A) to (E).

### (Component (A))

The component (A) is an organopolysiloxane resin that forms a crosslinking structure under an addition reaction in the presence of the following components (B) and (C) when the oil-in-water silicone emulsion composition for a release film according to the present invention is applied to a film to produce a release film. Therefore, favorable coating properties can be imparted to a release surface of the release film by the component (A). Specifically, as a chemical structure, the component (A) has an average composition formula represented by the general formula (1), and contains 1 to 5% by mole of alkenyl group bonded to a silicon atom, 10 to 90% by mole of an M unit represented by the general formula (2), 0 to 90% by mole of a T unit represented by the general formula (3), and 5 to 90% by mole of a Q unit represented by the general formula (4). The molar ratio M/Q of the M unit to the Q unit is 0.1 to 4, and the molar ratio T/Q of the T unit to the Q unit is 0 to 1,000.

[Chemical formula 1] R¹ₐR²_{b}SiO_{(4-a-b)/2} (1)

(wherein R¹ is the same or different monovalent hydrocarbon group containing no aliphatic unsaturated group, R² is an alkenyl group, a is 0.999 to 2.999, b is 0.001 to 2, and a + b is 1 to 3), 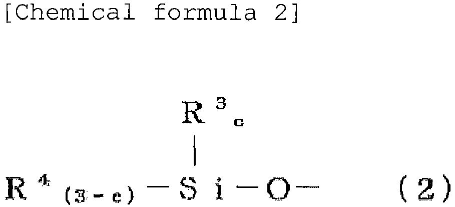 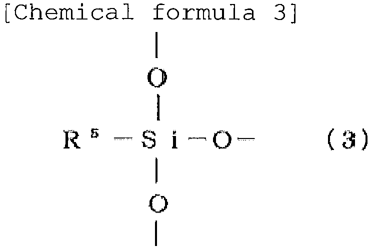 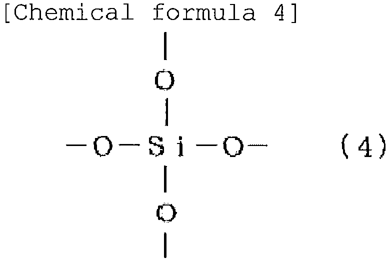 (wherein R³ is independently a substituted or unsubstituted monovalent hydrocarbon group having 1 to 20 carbon atoms and no aliphatic unsaturated bond, R⁴ is independently a substituted or unsubstituted alkenyl group having 2 to 20 carbon atoms, R⁵ is a substituted or unsubstituted alkenyl group having 1 to 20 carbon atoms, and c is an integer of 0 to 3.)

Examples of the alkenyl group in the component (A) may include alkenyl groups having 2 to 8 carbon atoms such as a vinyl group, an allyl group, a 1-butenyl group, and a 1-hexenyl group. These alkenyl groups react with the component (B), which will be described later, to form a network structure. The content of the component (A) is 20 to 60 parts by mass relative to 100 parts by mass of the total mass of the components (A) to (E). If the amount is more than 60 parts by mass, the viscosity of the composition may increase and the handling property may deteriorate. More preferably, the amount is 25 to 55 parts by mass.

The component (A) is to be referred to as the main ingredient of the oil-in-water silicone emulsion composition for a release film, and is a component responsible for the coating properties and the release properties after the release film is formed. Since the component (A) is a polymer having a siloxane skeleton, the easily rotatable main chain and the presence of a methyl group in the M unit can lower the surface free energy of the release surface, whereby the release film exerts the release properties. In addition, the presence of the Q unit or T unit having a high density of siloxane bond causes a coating material having a high polarity and a thin film thickness to exert the coating properties of the coating material.

The content of the M unit in the component (A) is preferably within a range of 10 to 90% by mole. When the content is less than 10% by mole, sufficient release properties cannot be exerted. When the content is more than 90% by mole, the introduction proportion of the Q unit or the T unit is not increased and the length of a polymer chain is decreased in terms of design of the component (A). In this case, the release film does not have sufficient strength or an unreacted chain is produced, so that some defects may be caused.

The content of the Q unit in the component (A) is preferably within a range of 5 to 90% by mole. When the content is less than 5% by mole, sufficient coating properties cannot be exerted. When the content is more than 90% by mole, the introduction proportion of the M unit is not increased in terms of design of the component (A). In this case, the crosslink density of the whole release film becomes too high, so that flexibility is deteriorated.

The component (A) may contain the T unit as an optional component. The presence of the T unit can increase the density of siloxane bond in the release film like the Q unit. The density of siloxane bond per unit of the T unit is lower than that of the Q unit. The content of the T unit in the component (A) is preferably within a range of 0 to 90% by mole. When the content is more than 90% by mole, the introduction proportion of the M unit is not increased in terms of design of the component (A). In this case, the crosslink density of the whole release film becomes too high, so that flexibility is deteriorated.

The molar ratio M/Q of the content of the M unit to the content of the Q unit in the component (A) is a factor of mostly affecting the coating properties in the composition.
The content of the Q unit that increases the density of siloxane bond directly affects the coating properties. However, in introduction of the Q unit into the organopolysiloxane component, the Q unit is generally introduced in a form in which a terminal thereof is capped with the M unit. Therefore, it is reasonable that the content of the Q unit is substantially adjusted by the molar ratio M/Q. The molar ratio M/Q is preferably within a range of 0.1 to 4. When the molar ratio is less than 0.1, the content of methyl group in the composition is low. Therefore, sufficient release properties are not exerted. When the molar ratio is more than 4, the crosslink density of the whole release film becomes too high, and flexibility is deteriorated. The molar ratio M/Q is more preferably within a range of 0.2 to 2.5, and further preferably within a range of 0.5 to 1.5.

Even when the molar ratio M/Q is less than 0.01 or more than 4, the content of the methyl group in the release film that affects the releasability can also be adjusted by adjusting the content of the Q unit or introducing a methyl group using a different component into the release film. However, it is difficult to simultaneously achieve both favorable coating properties and favorable release properties. Therefore, it is preferable that the molar ratio M/Q fall within the aforementioned range.

When the T unit is introduced, the density of siloxane bond in the component (A) is increased. However, the increase by introduction of the T unit is less effective than that by introduction of the Q unit. Therefore, the molar ratio T/Q of the T unit to the Q unit has a certain proper range. The molar ratio T/Q is preferably within a range of 0 to 1,000. When the molar ratio is more than 1,000, the content of the Q unit becomes too low. Therefore, the effect of increasing the density of siloxane bond is insufficient, and sufficient coating properties are not obtained. The molar ratio T/Q is more preferably within a range of 0 to 500.

The component (A) may be a single component or a mixture of two or more types of components that satisfy conditions described above.

### (Component (B))

The component (B) is an organohydrogenpolysiloxane having an average composition formula represented by the general formula (5) and containing two or more hydrogen atoms bonded to silicon atoms in one molecule, and is a cross-linking component for the component (A).

(Chemical formula 5) R⁶_{d}HₑSiO_{(4-d-e)/2} (5)

In the formula (5), R⁵ is the same or different monovalent hydrocarbon group containing no aliphatic unsaturated group, d is 0.999 to 2.999, e is 0.001 to 2, and d + e is 1 to 3. R⁵ used is a hydrocarbon group exemplified as examples of R¹, and is preferably an alkyl group, more preferably a methyl group. The number of hydrogen atoms bonded to the silicon atom of the component (B) is preferably 3 or more in one molecule. The viscosity of this component (B) at 25°C is usually 1 to 3,000 mPa·s, and preferably 5 to 500 mPa·s.

The content of the component (B) is 5 to 30 parts by mass relative to 100 parts by mass of the total mass of the components (A) to (E). If the content is less than 5 parts by mass, the curing of the component (A) is insufficient and the strength of the release film is insufficient. If the content is more than 30 parts by mass, the viscosity of the composition is increased and the handling property may deteriorate as well as the SiH group becomes excessive. Thus, there is a possibility that unreacted crosslinking agent bleeds out after the formation of the release film, so that some trouble may occur. The content is more preferably 10 to 20 parts by mass.

The amount of the component (B) to be mixed in the oil-in-water silicone emulsion composition for a release film according to the present invention is adjusted according to the number of the alkenyl group of the component (A). The amount of the component (B) to be mixed is adjusted so that the ratio (NE/NA) of the number (NE) of the hydrogen atoms bonded to a silicon atom of the component (B) to the number (NA) of the alkenyl group bonded to a silicon atom of the component (A) is 1.0 or more and 6.0 or less (1.0 ≤ (NE/NA) ≤ 6.0), and preferably 1.5 or more and 4.0 or less (1.5 ≤ (NE/NA) ≤ 4.0). When NE/NA is less than 1, curing of the composition is not sufficiently promoted, and an unreacted alkenyl group remains in a release agent layer. In this case, the release properties are likely to be changed over time. When NE/NA is more than 6, the release properties are enhanced due to the organohydrogenpolysiloxane despite the intension of the present invention. Those skilled in the art can produce the component (B) by a publicly known method.

### (Component (C))

The component (C) is a nonionic surfactant and plays a role of dispersing the components (A) and (B) and the component (D) described later in water, so that the oil-in-water silicone emulsion composition for a release film according to the present invention can be provided. The component (C) is preferably a nonionic surfactant having an HLB value of 8.0 to 19.0, preferably 10.0 to 18.0, and particularly preferably 10.0 to 16.0. Note that an HLB value represents the balance between hydrophilicity and lipophilicity. The component (C) is not particularly limited as long as the component (C) is a nonionic surfactant having an HLB value falling within the aforementioned range. If the HLB value of the surfactant used is not appropriate, even when emulsification is achieved, storage stability and dilution stability are poor and sufficient performance cannot be exerted. As another emulsifying aid, a surfactant having a low HLB value may be used in combination.

Examples of such nonionic surfactants may include a sorbitan fatty acid ester, a glycerin fatty acid ester, a decaglycerin fatty acid ester, a polyglycerin fatty acid ester, a propylene glycol pentaerythritol fatty acid ester, a polyoxyethylene sorbitan fatty acid ester, a polyoxyethylene solibit fatty acid ester, a polyethylene glycerin fatty acid ester, a polyethyleneglycol fatty acid ester, a polyoxyethylene alkyl ether, a polyoxyethylene polyoxypropylene alkyl ether, a polyoxyethylene alkylphenyl ether, a polyoxyethylene caster oil, hydrogenated caster oil, a polyoxyethylene alkyl amine fatty acid amide, and a polyalkyl glicoside. These nonionic surfactants are preferable in terms of safety, stability, and price, and can be used solely or as a mixture of two or more types thereof. In particular, from the viewpoint of emulsion stability, a polyoxyethylene alkyl ether is preferable. The content of the component (C) is 1 to 10 parts by mass relative to 100 parts by mass of the total mass of the components (A) to (E).
If the content is less than 1 part by mass, dispersion is difficult to occur, and if it is more than 10 parts by mass, the viscosity of the resulting composition becomes high and the handling property becomes poor. It is more preferably 3 to 6 parts by mass.

### (Component (D))

The component (D) is a platinum-based catalyst. The component (D) is a hydrosilylation catalyst that catalyzes an addition reaction in which the crosslinking structure of the component (A) through the component (B) is formed. The component (D) is contained in an amount of 1 to 500 ppm, preferably 5 to 200 ppm, and more preferably 20 to 100 ppm, relative to the weight of the component (A). When the content of the component (D) is less than 1 ppm, it takes a long time to cure the composition, and the production efficiency of the release film in which the oil-in-water silicone emulsion composition for a release film according to the present invention has been applied may be deteriorated. When the content is more than 500 ppm, the time required for processing the composition is short. Therefore, workability when the composition is applied to a film substrate may be deteriorated.

The component (D) is composed of a metal or a compound containing the metal. Examples of the metal and compounds thereof may include platinum, rhodium, palladium, ruthenium, and iridium. Preferred examples used may be platinum and a compound containing platinum. Among these, platinum-based catalysts are particularly suitable because of their high reactivity. The metal may be fixed on a particulate carrier material, such as activated carbon, aluminum oxide, or silicon oxide. Examples of the platinum compounds may include platinum halides (for example, reaction products of cyclohexane and PtCl₄, H₂PtCl₄·6H₂O, Na₂PtCl₄·4H₂O or H₂PtCl₄·6H₂0), a platinumolefin complex, a platinum-alcohol complex, a platinumalcoholate complex, a platinum-ether complex, a platinumaldehyde complex, a platinum-ketone complex, a platinumvinylsiloxane complex (for example, a platinum-1,3-divinyl 1,1,3,3-tetramethyldisiloxane complex, bis-(y-picoline)-platinum dichloride, trimethylenedipyridine-platinum dichloride, dicyclopentadiene-platinum dichloride, cyclooctadiene-platinum dichloride, and cyclopentadieneplatinum dichloride), a bis(alkynyl)bis(triphenylphosphine) platinum complex, and a bis(alkynyl)(cyclooctadiene) platinum complex. The hydrosilylation catalyst can also be used in a microencapsulated form. The particulate solid which contains the catalyst in this case and is insoluble in an organopolysiloxane is, for example, a thermoplastic resin such as a polyester resin or silicone resin. It is also possible to use the platinum-based catalyst in the form of a inclusion compound, for example in cyclodextrins.

### (Component (E))

The component (E) is water that is a dispersion medium during emulsification of the components (A) to (D). Water is not particularly limited, and ion exchange water is preferably used. The pH of the water is preferably 2 to 12, and particularly preferably 4 to 10. Use of mineral water is not recommended. However, when mineral water is used, it is preferable that mineral water be used in combination with a metal deactivator, or the like. When the total mass of components dispersed is 100 parts by mass, the component (E) is added in an amount corresponding to 30 to 80 parts by mass, and preferably 35 to 70 parts by mass.

It is preferable that the oil-in-water silicone emulsion composition for a release film according to the present invention be not produced by dispersing all the components (A) to (D) once in the component (E) but be produced by preparing a kit in which among the components (A) to (D), at least two or more types of components are dispersed in the component (E) and finally mixing the kit as an oil-in-water silicone emulsion composition. When all the components (A) to (D) are dispersed once in the component (E), an addition reaction of the components (A), (B), and (D) advances in production of the composition. As a result, the release agent layer cannot be formed on the film substrate. Examples of producing methods may include a method including preparing a kit in which the components (A), (C), and (D) are dispersed in the component (E), preparing another kit in which the components (B) and (D) are dispersed in the component (E), and mixing these kits. Even when some types of kits are prepared, the amounts of the components (A) and (B) are adjusted so that in a final oil-in-water silicone emulsion composition, the ratio (NE/NA) of the number (NE) of the hydrogen atoms bonded to a silicon atom of the component (B) to the number (NA) of the alkenyl group bonded to a silicon atom of the component (A) is 1.0 or more and 6.0 or less (1.0 ≤ (NE/NA) ≤ 6.0), and preferably 1.5 or more and 4.0 or less (1.5 ≤ (NE/NA) ≤ 4.0), and the amount of the component (C) is necessarily adjusted to 1 to 500 ppm, preferably 5 to 200 ppm, and more preferably 20 to 100 ppm, relative to the weight of the component (A). Even when some of the components (A) to (D) are dispersed in the component (E) to form kits, the oil-in-water silicone emulsion composition for a release film according to the present invention is finally made as an emulsion composition in which influence on the environment and the human body is considered, unlike a solvent-containing composition. This is because the component (E) as the dispersion medium is water.

As a method for dispersing the components (A) to (D) in the component (E), a publicly known method can be employed. For example, a method for mixing and emulsifying the components with a homogenizer, a colloid mill, a homomixer, a high-speed stator rotor stirrer, or the like can be employed. In dispersing the components (A) to (D) in the component (E), specifically, a part of the component (E) is added to the components (A) to (D), and the mixture is stirred to form a water-in-oil emulsion. The rest of water is further added to form an oil-in-water emulsion. In this manner, dispersion of the components (A) to (D) is facilitated, and the stability of the emulsion is improved.

For example, the oil-in-water silicone emulsion composition for a release film according to the present invention may contain a component other than silicone, such as an organic polymer. When desired conditions are satisfied, target coating properties and release properties are achieved. In order to achieve more sufficient coating properties and release properties, it is preferable that the composition contain silicone as a main component.

When the oil-in-water silicone emulsion composition for a release film according to the present invention contains an organopolysiloxane having a polar modifying group, the coating properties can be enhanced more. In particular, a polyethermodified silicone is the most preferable.

The content of the silicone in the silicone composition is preferably 1 to 50 parts by mass. When the content is less than 1 part by mass, an effect of improving the coating properties is insufficient. When the content is more than 50 parts by mass, the release properties are deteriorated. The content is particularly preferably within a range of 2 to 30 parts by mass.

The oil-in-water silicone emulsion composition for a release film according to the present invention may contain an adhesion-enhancing agent to enhance the adhesion to the film substrate, a migration component to adjust the release properties, or a preservative to prevent corrosion without impairing the object of the present invention. Examples of such an adhesion-enhancing agent may include a general silane coupling agent, examples of such a migration component may include an oil-in-water silicone emulsion, and examples of such a preservative may include sorbic acid, sorbate, acetic acid, lactic acid, and formalin.

The release film obtained by applying the oil-in-water silicone emulsion composition for a release film according to the present invention is in accordance with the following embodiment.

Examples of the substrate of the release film according to the present invention may include vinyl-based resins such as a polyvinyl chloride resin, a polyvinylidene chloride resin, and a polyvinyl alcohol resin; polyester-based resins such as a polybutylene terephthalate resin, a polyethylene terephthalate resin, and a polyethylene naphthalate resin; polyolefin resins such as a polyethylene resin, a polypropylene resin, a polymethylpentene resin, and an ethylene-vinyl acetate copolymer; plastics such as a polycarbonate, a polystyrene, an ionomer, a polyacrylic acid ester, nylon, a polyamide, a polyether sulfone, a polyphenyl sulfide, a polyimide, a polyurethane, a polyether imide, a modified polyphenylene ether, a polyether-ether ketone, a polyacrylonitrile, norbornene, cycloolefin, cellophane, and films made of cellulose acetate, vinylon, and regenerated cellulose.
Plastics is particularly preferable.

A method for applying the oil-in-water silicone emulsion composition for a release film according to the present invention is not particularly limited, and examples thereof may include a gravure coating method, a bar coating method, a spray coating method, a spin coating method, an air-knife coating method, a roll coating method, a blade coating method, a gate roll coating method, a die coating method, a doctor coating method, and a brush coating method. The application of the oil-in-water silicone emulsion composition for a release film according to the present invention may be off-line coating of a plastic film after stretching or in-line coating in a stretching process during production of plastics. When the amount of the component (B) is small, in-line coating is preferable. In the present invention, the thickness of the release agent layer after drying is 0.01 to 3 µm, preferably 0.01 to 0.5 µm, and more preferably 0.01 to 0.3 µm.

The method for curing the oil-in-water silicone emulsion composition for a release film according to the present invention is not particularly limited. For example, an ordinary method for curing the oil-in-water silicone emulsion composition for a release film with a heating drum or a hot air drying furnace may be employed. A curing condition is not particularly limited. When the oil-in-water silicone emulsion composition is processed at 50 to 250°C for 5 seconds to 10 minutes, the release agent layer is formed.

A method for applying a coating material to a release surface is not particularly limited. The same method as the method employed when the oil-in-water silicone emulsion composition for a release film according to the present invention is applied to the film substrate may be employed. The coating material can be applied in a thin thickness of 0.01 to 0.3 µm.

As described above, favorable coating properties are obtained by the oil-in-water silicone emulsion composition for a release film according to the present invention and the release film obtained by applying the composition, regardless of a variety of coating material, that is, the presence or absence of polarity, and the film thickness of the coating material. Even when a high polar coating material is thinly applied, the release properties inherent in silicone can be kept, and favorable coating properties can be achieved. In the present invention, even when the polarity of the coating material is high or the film thickness is thin, favorable coating properties can be imparted. In particular, even when the polarity of the coating material is high and the film thickness is thin, that is, even in the most difficult case, favorable release properties can be kept, and favorable coating properties can be imparted.

When the release properties are deteriorated by decreasing the film thickness, it is conventionally difficult to balance the coating properties and the release properties. However, the present invention solves this problem.

Specifically, a case where the high polar coating material is thinly applied means a case where a coating material (e.g., a ceramic material typified by a ceramic slurry, such as barium titanate) having such a high polarity that repelling or a pinhole after drying occurs during application is applied in a film thickness within a range of 0.01 to 0.3 µm to a release film obtained by applying a variety of silicone release agent disclosed in the conventional techniques. In this case, the occurrence of repelling or a pinhole is caused by the release properties inherent in silicone.

Even in such a case, favorable coating properties can be imparted to the release surface of the release film by applying the composition according to the present invention to the film substrate. Therefore, even when such a high polar coating material that repelling or a pinhole occurs in a conventional release film having a silicone release agent layer is applied in the aforementioned film thickness, the occurrence of repelling and a pinhole can be prevented.

The coating properties in a case where a coating material is applied on a film depend on the wetting properties of an interface between the film and the coating material. This mainly depends on a relationship between the surface free energy of the film and that of the coating material, that is, a problem mainly about the interface.

In the present invention, the coating properties are increased not by solving the problem about the interface but by an interaction between the whole film and the whole coating material, that is, an action corresponding to so-called electrostatic attraction,. In order to increase the coating properties of the high polar coating material such as a ceramic slurry, it is necessary that the electrostatic attraction be applied between the coating material and the release film. Therefore, it is preferable that the release film have a structure in which the polarity is higher. In order to most efficiently and reasonably form the structure, introduction of a structure having high siloxane density into the release film is preferable. To speak plainly, the density of the Q unit is mainly increased, and the polarity on a side of the film is also increased. Thus, it is estimated that electric polarization between both the materials is increased and the attraction is enhanced. Accordingly, the problem such as occurrence of repelling and a pinhole can be solved. Further, the present invention contributes to stabilization not only at the early stage of the problem but also over time.

The release properties inherent in silicone are not lost. Therefore, even when the high polar coating material is thinly applied as describe above, the coating material can be released from the release surface without poor release.

Conventionally, the coating properties are adjusted by the surface free energy of the release surface. Therefore, the adhesion of the coating material to the release surface may be deteriorated over time by migration of a silicone component and the like over time after applying the coating material to the release surface, production of any decomposed substance, physical or chemical change of the interface, or the like. The present invention can suppress such temporal deterioration.

The present invention is effective for not only a case where the high polar coating material is applied but also a case where a low polar coating material is applied. When the low polar coating material is applied, the coating properties may be adjusted by the surface free energy of the release surface. However, when the adjustment is insufficient, the coating properties can be adjusted by the electrostatic attraction as described above.

Accordingly, both the coating properties and the release properties can be simultaneously achieved without deterioration.

Even when the high polar coating material is thinly applied, favorable coating properties can be imparted to the release surface without losing the release properties by the composition according to the present invention and the release film obtained by applying the composition. This is because by the density of a crosslinking structure derived from the M unit and the Q unit that is obtained by an addition reaction that advances between the components (A), (B), and (C) during formation of the release agent layer from the composition on the film substrate, the coating properties with respect to the release surface can be adjusted, and by exposure of the methyl group contained in the composition to the release surface of the release film, the release properties inherent in silicone can be adjusted. With reference to an example of the oil-in-water silicone emulsion composition for a release film according to the present invention, when each methyl group derived from the components (A) and (B) (when the nonionic surfactant is an organosiloxane, the methyl group derived from the component (D) is also added) satisfies the constituent unit defined above, the methyl group in an amount sufficient to impart the release properties inherent in silicone is exposed to the release surface of the release film. Therefore, the release properties from the release surface are obtained.

In a mechanism in which the coating properties with respect to the release surface are adjusted by the density of the crosslinking structure derived from the M unit and the Q unit of the component (A) and the release properties from the release surface are adjusted by the methyl group exposed to the release surface, the coating properties with respect to the release surface and the release properties from the release surface can be independently adjusted by factors that are different from each other, such as the density of the crosslinking structure derived from the M unit and the Q unit of the component (A) that is formed on a surface of the release film and the methyl group exposed to the release surface of the release film. Therefore, even when the high polar coating material is thinly applied, the release properties inherent in silicone can be kept, and favorable coating properties can be reliably achieved.

### <Embodiment of method for adjusting coating properties and release properties>

According to a method for adjusting the coating properties and the release properties of the present invention, a method for independently adjusting and optimizing the coating properties with respect to the release surface of the release film and the release properties from the release surface of the release film can be obtained.

In the conventional techniques, the coating properties and the release properties are balanced for optimization of the properties while the properties are deteriorated each other. This is because the coating properties and the release properties are controlled mainly by the surface free energy of the release film. In the present invention, the coating properties are adjusted by the density of siloxane bond in the release agent composition, and the release properties are adjusted by the methyl group in the composition. From a relationship in which the coating properties and the release properties are balanced while the properties are deteriorated each other, a relationship of the properties is changed, and both the properties can be simultaneously achieved under a preferable condition. In this term, the idea of the present invention is different from that of the conventional techniques.

In the present invention, the coating properties are adjusted by a mechanism in which a structure factor such as the density of siloxane bond in the release film acts on not only the release surface but also the whole film and the whole coating material while the surface free energy is kept to a sufficiently low value of less than 25 mJ/m² that is a value of surface free energy of the release film with a general silicone release agent, which is considered to exert sufficient release properties. That is, the coating properties and the release properties can be each independently adjusted.

In the present invention, the coating properties and the release properties can also be each independently adjusted in a release film having a large surface free energy of more than 30 mJ/m².

The density of siloxane bond in the release agent composition is generally increased in an order of structural units of siloxane of an M unit, a D unit, a T unit, and a Q unit. As the content of the Q unit in the release agent composition is increased, the coating properties are simply improved.

On the other hand, as the content of the methyl group on the surface of the release film formed from the release agent composition is larger, the surface free energy is lowered, and the release properties are improved. The concentration of the methyl group on the surface of the release film is substantially effective. However, as the content of the methyl group in the release agent composition is larger, the concentration of the methyl group on the film surface is generally higher. In this case, the methyl group may be a methyl group derived from an organopolysiloxane or another compound, for example, an organic polymer. The methyl group may be a methyl group derived from a low-molecular-weight compound or a polymer.

Setting of an amount of the Q unit and setting of an amount of the methyl group are independent factors. Therefore, the coating properties and the release properties can be each independently adjusted, unlike the conventional techniques. Further, both the coating properties and the release properties can be simultaneously achieved as preferable properties.

When the main component of the release agent composition is silicone generally having excellent releasability, the content of the Q unit and the content of the methyl group can be substantially independently adjusted. However, they cannot be completely independently adjusted. In the silicone, the methyl group is present as the M unit. Therefore, a change in amount of the Q unit and a change in amount of the methyl group are slightly affected on each other.

In a resin including the Q unit, a terminal thereof is capped with the M unit, or the like. Therefore, in the silicone, a resin in which a pure Q unit is present is generally rare.

When the release agent contains the silicone as a main component, it is preferable that the molar ratio M/Q be used as the content of the Q unit that is the most exactly and reasonably represented. In the present invention, the molar ratio M/Q is set as the proportion of the Q unit present in the release agent composition.

In order to make the crosslink density in the release agent layer appropriate for favorable coating properties, it is preferable that the release agent composition contain a component in which the molar ratio M/Q of the M unit to the Q unit is 0.001 to 4. This is due to the same reason as that in the description of the component (A).

The content of the methyl group in the release agent composition is defined as that in % by mass in the solid content of the whole composition. In order to impart sufficient release properties to the release surface, the content of the methyl group in the solid content is 5% by mass or more. When the content is less than 5% by mass, a sufficient amount of methyl group does not exist on the release surface, the surface free energy is not decreased, and the release properties are not sufficiently exerted.

The content of the methyl group is a calculated value based on the amount of used raw material of the composition.

The release agent composition containing the silicone as a main component contains the M unit and the D unit as essential components, but may contain the T unit. The T unit is not an essential component. A proper amount of the T unit can be introduced according to a purpose. When the T unit is introduced, the density of siloxane bond can be increased less than that when the Q unit is introduced. A structure that is soluble and has high heat resistance, such as a silsesquioxane structure, may be introduced. When the molar ratio M/Q satisfies the preferable range and the molar ratio T/Q satisfies the preferable range, both the coating properties and the release properties are simultaneously achieved by the present invention.

The purpose herein means physical properties required for a film, such as strength and toughness, in various types of uses of MLCC, a semiconductor interlayer insulating film, a capacitor film, a thermal conduction film, and the like.

When completely independent adjustment of the coating properties by the density of siloxane bond in the release film and the release properties by the methyl group is prioritized, it is necessary to design a system of a composition capable of completely independently changing adjustment of the content of a portion where the density of siloxane bond is high, such as the Q unit, and adjustment of the content of the methyl group.

Therefore, a hybrid composition containing an organic material containing the Q unit, silicone, and another material, or the like is effective.

As an example of the foregoing material, the organic material containing the Q unit will be described.

The type of the organic material is not limited. However, it is necessary that the organic material have a methyl group. Examples of such an organic material may include polyethylene, polypropylene, polyisobutylene, polyurethane, and polyacrylonitrile. The polymer is configured to have a reaction group on a part thereof, so that therefore the Q unit can be introduced. For example, an alkenyl group is introduced into the polymer, an alkoxysilyl group is introduced by a hydrosilylation reaction, and cohydrolysis is carried out with an alkoxysilane that is a Q unit source.

In this case, the content of the methyl group in the release agent composition is also defined as that in % by mass in the solid content of the whole composition. In order to impart sufficient release properties to the release surface, the content of the methyl group in the solid content is preferably 5% by mass or more. When the content is less than 5% by mass, a sufficient amount of methyl group does not exist on the release surface, the surface free energy is not decreased, and the release properties are not sufficiently exerted. The content of the methyl group is a calculated value based on the amount of used raw material of the composition.

The amount of the Q unit in the release agent composition is preferably 5% by mass or more. When the amount is less than 5% by mass, sufficient coating properties cannot be exerted. The amount is more preferably 10% by mass or more. The content of the Q unit is a calculated value based on the amount of used raw material of the composition.

A procedure for forming such a material on a substrate is not limited, and a procedure for obtaining a uniform coating film through an emulsion is preferable.

In the present invention, all the contents of the M unit, the T unit, the Q unit, and the methyl group, the molar ratio M/Q, and the molar ratio T/Q in the components or the whole composition can be determined by calculation from the ratio of used raw material. In a sampling test, the composition after crosslinking was collected, and analyzed by a ²⁹Si-NMR method. The analyzed value was coincident with the value calculated from the used ratio.

In the present invention, bleeding of a silicone component through the release surface from the inside of the release film or migration of the silicone component to a coating layer can be prevented or suppressed. When the composition contains the silicone as a main component and a component at a portion between the components is cured, production of low-molecular-weight compound or unreacted compound of the silicone can be prevented or suppressed. When the composition has a hybrid structure of the silicone and the other material and is reactive, production of low-molecular-weight compound or unreacted compound of the silicone can be prevented or suppressed.

According to a purpose, the silicone component may be forced to be migrated. For example, the purpose includes supporting the release properties or another purpose. This purpose is achieved by a method in which a low-molecular-weight or unreacted silicone component is added. When migration over time should be controlled, the purpose can be achieved by selecting the structure or molecular weight of the migration component.

Even when unintended migration of the silicone component occurs, the present invention is effective.

Even when the silicone component is positively migrated or the silicone component is migrated as an unintended result, the coating properties can be adjusted to achieve desired coating properties without being affected by the migration of silicone. This is because in the present invention, the coating properties are not adjusted by the surface free energy of the release surface.

### Examples

Specifically, the present invention will be described with reference to Examples and Comparative Examples. However, the present invention is not limited to the following Examples.

### <Method for producing release film>

A release agent composition prepared in each of Examples and Comparative Examples was diluted with purified water so that the solid content concentration was 2%, to prepare a coating liquid.

The coating liquid prepared by the aforementioned method was applied to Teijin Tetoron Film G2 (thickness: 38 µm) manufactured by Teijin DuPont Films Japan Limited with a Mayer bar coater No. 3, dried at normal temperature for 2 minutes, and then heat-cured in an oven at 200°C for 1 minute, to prepare a release film.

### <Method for measuring release force and evaluation method>

To a coating surface of the release film prepared as described above, TESA7475 was attached, and pressure-bonded with a roller. The release film was stored for 2 hours with a 20-g/cm² weight disposed on the release film. After that, the release force of the tape at a release angle of 180° and a release rate of 0.3 m/minute was measured.

For release properties, a case where the release force was 7 N/inch or less was evaluated as pass.

The following conversion of non-SI units applies: 1 inch = 2.54 cm.

### <Test of paintability (coating properties) and evaluation method>

For a method for evaluating the coating properties of a high polar coating material with respect to a surface of the release film prepared by the aforementioned method, a test of paintability of an ink was performed.

As the ink, "FELT MARKER" manufactured by Teranishi Chemical Industry Co., Ltd., was used. With black, blue, and red felt markers, a lower-case alphabetic character "a" was written on a surface of a release surface.

The paintability was evaluated in accordance with five stages.
5: With the three felt markers, the letter was well written without repelling and defects.
4: With the three felt markers, the letter was written without repelling and defects, but ununiform color tone was partially found.
3: On the letter written with one of the felt markers, a partial defect was found, but the letter was sufficiently read. With the rest thereof, the letter was well written without repelling and defects.
2: On the letter written with two or three of the felt markers, a partial defect was found. Alternatively, on the letter written with one of the felt markers, repelling occurred.
1: On the letter written with two or three of the felt markers, repelling occurred.

A case where the stage was 3 or more was evaluated as pass.

As a wetting reagent, a mixed solution No. 22.6 for determination of wetting tension having a surface tension of 22.6 mN/m, manufactured by Wako Pure Chemical Industries, Ltd., was added dropwise on a surface of each of the release film samples. Whether the sample was wet with the wetting agent was determined.

### <Example 1>

Thirty four parts by mass of an organopolysiloxane having an M unit and a Q unit as the component (A), 6.0 parts by mass of an organopolysiloxane having an M unit and a D unit as the component (A), 7.4 parts by mass of an organopolysiloxane having an SiH group as the component (B), 3.4 parts by mass of a nonionic surfactant as the component (C), 0.0025 parts by mass of a platinum catalyst as the component (D), 11 parts by mass of an organic solvent as an optional component, and a balance of purified water as the component (E) were used to prepare 100 parts by mass of an emulsion.

The components (A) and (D) were mechanically emulsified with the component (C), to prepare an emulsion. Separately, the component (B) was mechanically emulsified with the component (C), to prepare an emulsion. After that, the emulsions were mixed and an addition reaction was caused to take place, thereby obtaining an emulsion in which a silicone cured product obtained by curing the component (A) and the component (B) was dispersed.

In the component (A), the content of the M unit was 39% by mole, and the content of the Q unit was 45% by mole. The content of the methyl group in the solid content of the whole composition was 15% by mass.

In the component (A), the molar ratio M/Q was 0.88, and the molar ratio T/Q was 0.

The ratio B/A of the number by mole of the SiH group in the component (B) to the number by mole of the alkenyl group in the component (A) was 2.9.

The obtained emulsion was diluted with purified water to have a predetermined solid content concentration, and the coating force was measured to be 4.2 N/inch. The paintability was evaluated to be 4. The wetting reagent was added dropwise on a film surface. The wetting agent was repelled.

The indication about the formulation of the composition and the test results of the composition are shown in Table 1. (Hereinafter the same is applied to Examples and Comparative Examples)

### <Example 2>

Twenty nine parts by mass of an organopolysiloxane having an M unit and a Q unit as the component (A), 12 parts by mass of an organopolysiloxane having an M unit and a D unit as the component (A), 6.7 parts by mass of an organopolysiloxane having an SiH group as the component (B), 3.7 parts by mass of a nonionic surfactant as the component (C), 0.0025 parts by mass of a platinum catalyst as the component (D), 9.1 parts by mass of an organic solvent as an optional component, and a balance of purified water as the component (E) were used to prepare 100 parts by mass of an emulsion in the same method as that in Example 1.

In the component (A), the content of the M unit was 30% by mole, and the content of the Q unit was 34% by mole. The content of the methyl group in the solid content of the whole composition was 16% by mass.

In the component (A), the molar ratio M/Q was 0.88, and the molar ratio T/Q was 0.

The ratio B/A of the number by mole of the SiH group in the component (B) to the number by mole of the alkenyl group in the component (A) was 2.9.

The obtained emulsion was diluted with purified water to have a predetermined solid content concentration, and the coating force was measured to be 1.9 N/inch. The paintability was evaluated to be 4. The wetting reagent was added dropwise on a film surface. The wetting agent was repelled.

### <Example 3>

Cohydrolysis was performed in an aqueous hydrochloric acid solution in a reaction container using vinyltrimethoxysilane, tetraethoxysilane, trimethylethoxysilane, and vinylmethyldimethoxysilane. The obtained solid substance was taken out, and water, methanol, and ethanol were sufficiently removed to obtain a solid content. This solid content was used as the component (A).

The aforementioned solid content was weighed so that 40 parts by mass of the total amount of respective silanes as the raw material of the component (A) was used. The weighed solid content, 7.4 parts by mass of an organopolysiloxane having an SiH group as the component (B), 3.4 parts by mass of a nonionic surfactant as the component (C), 0.0025 parts by mass of a platinum catalyst as the component (D), 11 parts by mass of an organic solvent as an optional component, and a balance of purified water as the component (E) were used to prepare 100 parts by mass of an emulsion in the same method as that in Example 1.

In the component (A), the content of the M unit was 74% by mole, and the content of the Q unit was 24% by mole. The content of the methyl group in the solid content of the whole composition was 24% by mass.

In the component (A), the molar ratio M/Q was 3.1, and the molar ratio T/Q was 0.

The obtained emulsion was diluted with purified water to have a predetermined solid content concentration, and the coating force was measured to be 1.0 N/inch. The paintability was evaluated to be 3.

### <Example 4>

Cohydrolysis was performed in an aqueous hydrochloric acid solution in a reaction container using tetraethoxysilane, trimethylethoxysilane, and vinylmethyldimethoxysilane. The obtained solid substance was taken out, and water, methanol, and ethanol were sufficiently removed to obtain a solid content. This solid content was used as the component (A).

The aforementioned solid content was weighed so that 26 parts by mass of the total amount of respective silanes as the raw material of the component (A) was used. The weighed solid content was used together with the components (B) to (E) to prepare an emulsion in the same method as that in Example 3 except that 17 parts by mass of an organopolysiloxane having an SiH group was used as the component (B).

In the component (A), the content of the M unit was 31% by mole, and the content of the Q unit was 64% by mole. The content of the methyl group in the solid content of the whole composition was 11% by mass.

In the component (A), the molar ratio M/Q was 0.48, and the molar ratio T/Q was 0.

The obtained emulsion was diluted with purified water to have a predetermined solid content concentration, and the coating force was measured to be 5.3 N/inch. The paintability was evaluated to be 3.

### <Example 5>

Thirty four parts by mass of an organopolysiloxane having an M unit and a Q unit as the component (A), 5.9 parts by mass of an organopolysiloxane having an M unit and a D unit as the component (A), 7.3 parts by mass of an organopolysiloxane having an SiH group as the component (B), 1.1 parts by mass of a polyether modified silicone oil as an optional component, 3.4 parts by mass of a nonionic surfactant as the component (C), 0.0025 parts by mass of a platinum catalyst as the component (D), 11 parts by mass of an organic solvent as an optional component, and a balance of purified water as the component (E) were used to prepare 100 parts by mass of an emulsion.

The components (A) and (D) were mechanically emulsified with the component (C), to prepare an emulsion. Separately, the component (B) was mechanically emulsified with the component (C), to prepare an emulsion. After that, the emulsions were mixed and an addition reaction was caused to take place, thereby obtaining an emulsion in which a silicone cured product obtained by curing the component (A) and the component (B) was dispersed.

In the component (A), the content of the M unit was 39% by mole, and the content of the Q unit was 45% by mole. The content of the methyl group in the solid content of the whole composition was 15% by mass.

In the component (A), the molar ratio M/Q was 0.88, and the molar ratio T/Q was 0.

The ratio B/A of the number by mole of the SiH group in the component (B) to the number by mole of the alkenyl group in the component (A) was 2.9.

The obtained emulsion was diluted with purified water to have a predetermined solid content concentration, and the coating force was measured to be 4.5 N/inch. The paintability was evaluated to be 5.

### <Example 6>

Cohydrolysis was performed in an aqueous hydrochloric acid solution in a reaction container using vinyltrimethoxysilane, tetraethoxysilane, trimethylethoxysilane, methyltrimethoxysilane, and vinylmethyldimethoxysilane. The obtained solid substance was taken out, and water, methanol, and ethanol were sufficiently removed to obtain a solid content. This solid content was used as the component (A).

The aforementioned solid content was weighed so that 27 parts by mass of the total amount of respective silanes as the raw material of the component (A) was used. The weighed solid content was used together with the components (B) to (E) to prepare an emulsion in the same method as that in Example 3 except that 26 parts by mass of an organopolysiloxane having an SiH group was used as the component (B).

In the component (A), the content of the M unit was 6.4% by mole, the content of the T unit was 74% by mole, and the content of the Q unit was 7.2% by mole. The content of the methyl group in the solid content of the whole composition was 28% by mass.

In the component (A), the molar ratio M/Q was 0.88, and the molar ratio T/Q was 10.2.

The obtained emulsion was diluted with purified water to have a predetermined solid content concentration, and the coating force was measured to be 0.90 N/inch. The paintability was evaluated to be 4.

### <Example 7>

Triethoxysilane was added to isobutylene having 10 repeating units, which has a methyl group at one terminal thereof and a vinyl group at the other terminal thereof, by a hydrosilylation reaction. The resulting polymer is referred to as a polymer 1. One hundred grams of the polymer 1 and 70 g of tetraethoxysilane were weighed, and cohydrolysis was performed in an aqueous hydrochloric acid solution in a reaction container. The obtained solid substance was taken out, and water and ethanol were sufficiently removed to obtain a solid content.

In the obtained solid content, the content of the methyl group was 39%, and the content of the Q unit was 27%. The obtained solid content was emulsified in the same method as that in Example 1 and the coating force was measured to be 4.2 N/inch. The paintability was evaluated to be 4.

### <Example 8>

A solid content was obtained by performing the reaction of the polymer 1 and tetraethoxysilane in the same method as that in Example 7 except that 40 g of tetraethoxysilane was used in Example 7.

In the obtained solid content, the content of the methyl group was 42%, and the content of the Q unit was 20%.

The obtained solid content was emulsified in the same method as that in Example 1, and the coating force was measured to be 4.0 N/inch. The paintability was evaluated to be 3.

### <Example 9>

Triethoxysilane was added to 1-dodecene by a hydrosilylation reaction.
The obtained polymer is referred to as a polymer 2. One hundred grams of the polymer 2 and 60 g of tetraethoxysilane were weighed, and cohydrolysis was performed in an aqueous hydrochloric acid solution in a reaction container. The obtained solid substance was taken out, and water and ethanol were sufficiently removed to obtain a solid content.

In the obtained solid content, the content of the methyl group was 28%, and the content of the Q unit was 28%. The obtained solid content was emulsified in the same method as that in Example 1, and the coating force was measured to be 6.8 N/inch. The paintability was evaluated to be 4.

### <Example 10>

A solid content was obtained by performing the reaction of the polymer 2 and tetraethoxysilane in the same method as that in Example 9 except that 30 g of tetraethoxysilane was used in Example 9.

In the obtained solid content, the content of the methyl group was 30%, and the content of the Q unit was 21%.

The obtained solid content was emulsified in the same method as that in Example 1, and the coating force was measured to be 6.3 N/inch. The paintability was evaluated to be 3.

### <Comparative Example 1>

A PET substrate, on which no release agent composition was applied, was directly subjected to tests of release properties and paintability.

The coating force was measured, but the coating force exceeding 10 N/inch was unmeasurable. The paintability was evaluated to be 5.

The film of Comparative Example 1 was wet with the wetting reagent.

### <Comparative Example 2>

Forty six parts by mass of an organopolysiloxane having an M unit and a D unit as the component (A), 3 parts by mass of an organopolysiloxane having an SiH group as the component

(B), 5 parts by mass of a nonionic surfactant as the component (C), 0.0025 parts by mass of a platinum catalyst as the component (D), and a balance of purified water as a component (E) were used to prepare 100 parts by mass of an emulsion in the same method as that in Example 1.

In the component (A), the content of the M unit was 0.71% by mole, and the content of the methyl group was 21% by mass.

In the component (A), the molar ratio M/Q was infinity, and the molar ratio T/Q was 0.

The ratio B/A of the number by mole of the SiH group in the component (B) to the number by mole of the alkenyl group in the component (A) was 2.9.

The obtained emulsion was diluted with purified water to have a predetermined solid content concentration, and the coating force was measured to be 0.20 N/inch. The paintability was evaluated to be 1.

### <Comparative Example 3>

Zero point two three parts by mass of an organopolysiloxane having an M unit and a Q unit as the component (A), 44 parts by mass of an organopolysiloxane having an M unit and a D unit as the component (A), 4 parts by mass of an organopolysiloxane having an SiH group as the component (B), 5 parts by mass of a nonionic surfactant as the component (C), 0.0025 parts by mass of a platinum catalyst as the component (D), 0.072 parts by mass of an organic solvent as an optional component, and a balance of purified water as the component (E) were used to prepare 100 parts by mass of an emulsion in the same method as that in Example 1.

In the component (A), the content of the M unit was 0.86% by mole, and the content of the Q unit was 0.17% by mole. The content of the methyl group in the solid content of the whole composition was 22% by mass.

In the component (A), the molar ratio M/Q was 5.1, and the molar ratio T/Q was 0.

The ratio B/A of the number by mole of the SiH group in the component (B) to the number by mole of the alkenyl group in the component (A) was 2.9.

The obtained emulsion was diluted with purified water to have a predetermined solid content concentration, and the coating force was measured to be 0.51 N/inch. The paintability was evaluated to be 2.

### <Comparative Example 4>

Hydrolysis was performed in an aqueous hydrochloric acid solution in a reaction container using tetraethoxysilane. The obtained solid substance was taken out, and water and ethanol were sufficiently removed to obtain a solid content. This solid content was used as the component (A).

The foregoing solid content was used together with the components (C) and (E) to prepare an emulsion in the same method as that in Example 3 except that the component (B) and the component (D) were not used in Example 3.

In the component (A), the content of the Q unit was 100%. The content of the methyl group in the solid content of the whole composition was 0%.

In the component (A), the molar ratio M/Q was 0, and the molar ratio T/Q was 0.

The obtained emulsion was diluted with purified water to have a predetermined solid content concentration, and the coating force was measured to be 8.8 N/inch. The paintability was evaluated to be 5.

### <Comparative Example 5>

Cohydrolysis was performed in an aqueous hydrochloric acid solution in a reaction container using vinyltrimethoxysilane, tetraethoxysilane, trimethylethoxysilane, methyltrimethoxysilane, phenyltriethoxysilane and vinylmethyldimethoxysilane. The obtained solid substance was taken out, and water, methanol, and ethanol were sufficiently removed to obtain a solid content. This solid content was used as the component (A).

The aforementioned solid content was weighed so that 40 parts by mass of the total amount of respective silanes as the raw material of the component (A) was used. The weighed solid content was used together with the components (B) to (E) to prepare an emulsion in the same method as that in Example 3 except that 0.41 parts by mass of an organopolysiloxane having an SiH group was used as the component (B).

In the component (A), the content of the M unit was 0.043% by mole, the content of the T unit was 99.7% by mole, and the content of the Q unit was 0.17% by mole. The content of the methyl group in the solid content of the whole composition was 16% by mass.

In the component (A), the molar ratio M/Q was 0.88, and the molar ratio T/Q was 20,000.

The obtained emulsion was diluted with purified water to have a predetermined solid content concentration, and the coating force was measured to be 5.0 N/inch. The paintability was evaluated to be 2.

### <Comparative Example 6>

Cohydrolysis was performed in an aqueous hydrochloric acid solution in a reaction container using vinyltrimethoxysilane, tetraethoxysilane, trimethylethoxysilane, methyltrimethoxysilane, phenyltriethoxysilane and vinylmethyldimethoxysilane. The obtained solid substance was taken out, and water, methanol, and ethanol were sufficiently removed to obtain a solid content. This solid content was used as the component (A).

The aforementioned solid content was weighed so that 40 parts by mass of the total amount of respective silanes as the raw material of the component (A) was used. The weighed solid content was used together with the components (B) to (E) to prepare an emulsion in the same method as that in Example 3 except that 0.47 parts by mass of an organopolysiloxane having an SiH group was used as the component (B).

In the component (A), the content of the M unit was 0.040% by mole, the content of the T unit was 99.7% by mole, and the content of the Q unit was 0.46% by mole. The content of the methyl group in the solid content of the whole composition was 0.18% by mass.

In the component (A), the molar ratio M/Q was 0.88, and the molar ratio T/Q was 100,000.

The obtained emulsion was diluted with purified water to have a predetermined solid content concentration, and the coating force was measured to be 8.4 N/inch. The paintability was evaluated to be 2.

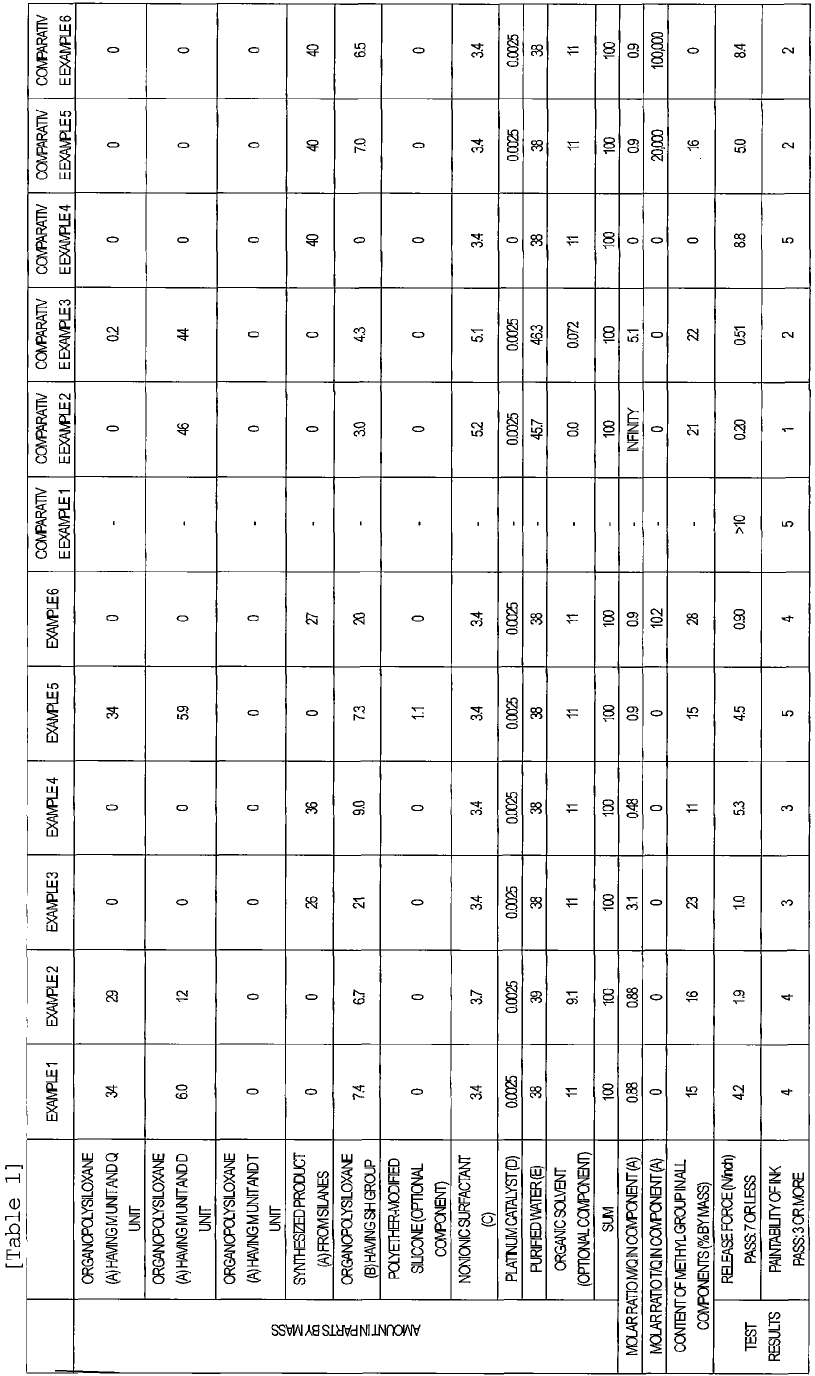

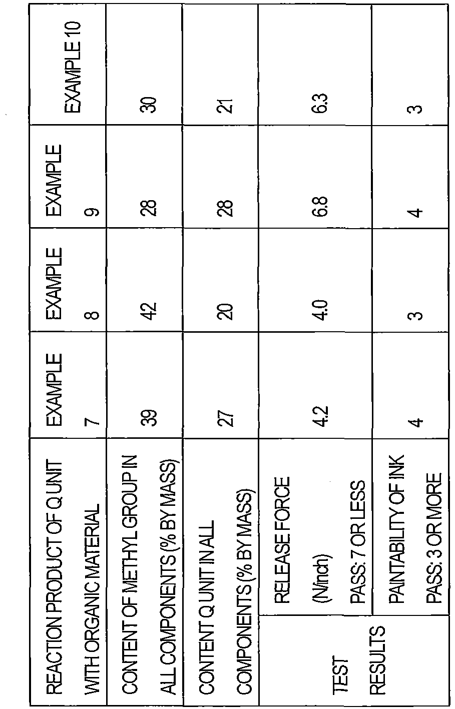

From the results of Examples and Comparative Examples and Table 1, the following is found.

In the release agent compositions containing silicone as a main component in Examples 1 to 6 and Comparative Example 1, favorable coating properties and release properties could be simultaneously achieved by adjusting the molar ratios M/Q and T/Q. In Example 5 where the polyether-modified silicone was added to the release agent composition, further favorable coating properties were obtained.

In Comparative Examples 2 to 6 where the molar ratio M/Q or T/Q was out of the predetermined range, the coating properties and/or the release properties were not passed.

In all Examples and Comparative Examples, as the amount of methyl group in the solid content of the whole composition is larger, the release properties are better. In Examples, favorable values of coating properties and release properties could be simultaneously achieved by adjusting the molar ratio M/Q and the content of methyl group.

In Examples 7 to 10, the coating properties and the release properties could be independently adjusted by the content of the Q unit and the content of methyl group in the release agent composition.

From the results in Examples 1 and 2, the surface tension of the release film is estimated to be less than 22.6 mN/m. In the release film containing silicone as a main component of which the surface free energy was estimated to be less than 25, sufficient coating properties were exerted.

### INDUSTRIAL APPLICABILITY

According to an oil-in-water silicone emulsion composition for a release film, a release film and a method for producing the release film, and a method for adjusting the coating properties and release properties of the release film according to the present invention, favorable coating properties and favorable release properties can be simultaneously achieved and the coating properties and the release properties can be independently adjusted even when a high polar coating material is applied to a surface of the release film so that the film thickness is thin. Therefore, the release film can meet a requirement of formation of light, thin, and small device in use of a multilayer ceramic capacitor (MLCC) or the like. In use for formation of a polar thin film such as a semiconductor interlayer insulating film, a capacitor film, or a thermal conduction film on a silicone film or the like or another use, it is possible that a new requirement is met by adjusting the coating properties and the release properties.

## Claims

1. An oil-in-water silicone emulsion composition for a release film of a multilayer ceramic capacitor (MLCC), a semiconductor interlayer insulating film, a capacitor film, or a thermal conduction film, comprising components (A) to (E):
a component (A): 20 to 60 parts by mass of an organopolysiloxane resin that has an average composition formula represented by the general formula (1), and contains 1 to 5% by mole of an alkenyl group bonded to a silicon atom, 10 to 90% by mole of an M unit represented by the general formula (2), 0 to 90% by mole of a T unit represented by the general formula (3), and 5 to 90% by mole of a Q unit represented by the general formula (4), and in which a molar ratio M/Q of the M unit to the Q unit is 0.1 to 4 and a molar ratio T/Q of the T unit to the Q unit is 0 to 1,000, (an amount in parts by mass is represented when the whole mass of the composition is 100 parts by mass, and hereinafter, the amount of each component is represented in the same manner)
(Chemical formula 1) R¹ₐR²_{b}SiO_{(4-a-b)/2} (1)
(wherein R¹ is the same or different monovalent hydrocarbon group containing no aliphatic unsaturated group, R² is an alkenyl group, a is 0.999 to 2.999, b is 0.001 to 2, and a + b is 1 to 3) 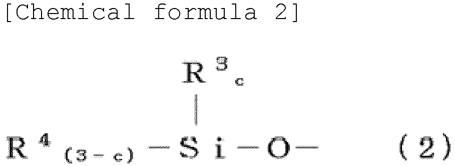 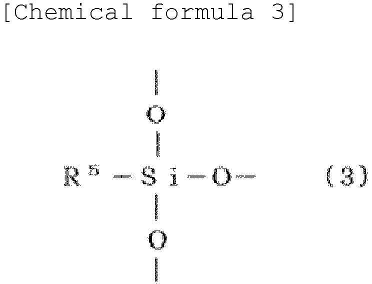 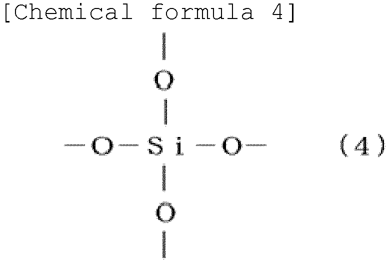 (wherein R³ is independently a substituted or unsubstituted monovalent hydrocarbon group having 1 to 20 carbon atoms and no aliphatic unsaturated bond, R⁴ is independently a substituted or unsubstituted alkenyl group having 2 to 20 carbon atoms, R⁵ is a substituted or unsubstituted alkenyl group having 1 to 20 carbon atoms, and c is an integer of 0 to 3.);
a component (B): 5 to 30 parts by mass of an organohydrogenpolysiloxane that has an average composition formula represented by the general formula (5), and contains two or more hydrogen atoms bonded to silicon atoms,
(Chemical formula 5) R⁶_{d}HₑSiO_{(4-d-e)/2} (5)
(wherein R⁶ is the same or different monovalent hydrocarbon group containing no aliphatic unsaturated group, d is 0.999 to 2.999, e is 0.001 to 2, and d + e is 1 to 3);
a component (C): 1 to 10 parts by mass of a nonionic surfactant;
a component (D): 1 to 500 ppm of a platinum-based catalyst relative to the amount of the component (A); and
a component (E): 30 to 80 parts by mass of water, wherein the content of the methyl group in the solid content in this release agent composition is 5% by mass or more, wherein the content of the methyl group is a calculated value based on the amount of used raw material of the composition.

2. The oil-in-water silicone emulsion composition for a release film of a multilayer ceramic capacitor (MLCC), a semiconductor interlayer insulating film, a capacitor film, or a thermal conduction film, according to claim 1, wherein the composition is prepared by a kit in which at least two or more of the components (A) to (D) are dispersed in the component (E) .

3. The oil-in-water silicone emulsion composition for a release film of a multilayer ceramic capacitor (MLCC), a semiconductor interlayer insulating film, a capacitor film, or a thermal conduction film, according to claim 1 or 2, wherein the oil-in-water silicone emulsion composition for a release film has been applied to a surface of a plastic film.

## Patentansprüche

1. Öl-in-Wasser-Silikon-Emulsionszusammensetzung für eine Trennfolie eines mehrschichtigen Keramikkondensators (MLCC), eine Isolierfolie von Halbleiterzwischenschichten, eine Kondensatorfolie oder eine Wärmeleitfolie, umfassend Komponenten (A) bis (E):
eine Komponente (A): 20 bis 60 Massenteile eines Organopolysiloxanharzes, das eine durchschnittliche Zusammensetzungsformel hat, die durch die allgemeine Formel (1) wiedergegeben wird und enthält: 1 bis 5 Mol.% einer Alkenylgruppe, die an ein Siliciumatom gebunden ist, 10 bis 90 Mol.% einer M-Einheit, die durch die allgemeine Formel (2) wiedergegeben wird, 0 bis 90 Mol.% einer T-Einheit, die durch die allgemeine Formel (3) wiedergegeben wird,
und 5 bis 90 Mol.% einer Q-Einheit, die durch die allgemeine Formel (4) wiedergegeben wird, und wobei ein Molverhältnis M/Q der M-Einheit zu der Q-Einheit 0,1 bis 4 beträgt, und ein Molverhältnis T/Q der T-Einheit zu der Q-Einheit 0 bis 1.000 beträgt (wobei eine Menge in Massenteilen wiedergegeben wird, wobei die Gesamtmasse der Zusammensetzung 100 Massenteile ist, und nachfolgend die Menge jeder Komponente in der gleichen Weise wiedergegeben wird)
(Chemische Formel 1) R¹ₐR²_{b}SiO_{(4-a-b)/2} (1)
(wobei R¹ die gleiche oder eine unterschiedliche einwertige Kohlenwasserstoffgruppe ist, die keine aliphatische ungesättigte Gruppe enthält, R² eine Alkenylgruppe ist, a 0,999 bis 2,999 ist, b 0,001 bis 2 ist, und a + b 1 bis 3 ist) 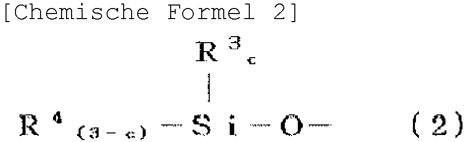 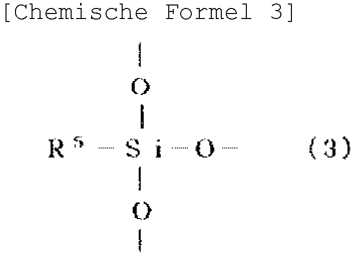 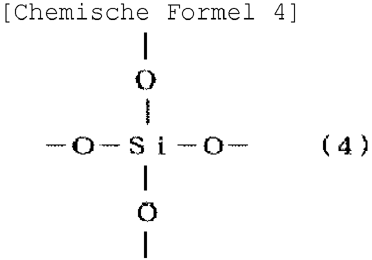
(wobei R³ unabhängig eine substituierte oder unsubstituierte einwertige Kohlenwasserstoffgruppe mit 1 bis 20 Kohlenstoffatomen und ohne aliphatische ungesättigte Bindung ist, R⁴ unabhängig eine substituierte oder unsubstituierte Alkenylgruppe mit 2 bis 20 Kohlenstoffatomen ist, R⁵ eine substituierte oder unsubstituierte Alkenylgruppe mit 1 bis 20 Kohlenstoffatomen ist, und c eine ganze Zahl von 0 bis 3 ist);
eine Komponente (B): 5 bis 30 Massenteile eines Organohydrogenpolysiloxans, das eine durchschnittliche Zusammensetzungsformel aufweist, die durch die allgemeine Formel (5) wiedergegeben wird und zwei oder mehr an Siliciumatome gebundene Wasserstoffatome enthält,
(Chemische Formel 5) R⁶_{d}HₑSiO_{(4-d-e)/2} (5)
(wobei R⁶ die gleiche oder eine unterschiedliche einwertige Kohlenwasserstoffgruppe ist, die keine aliphatische ungesättigte Gruppe enthält, d 0,999 bis 2,999 ist, e 0,001 bis 2 ist, und d + e 1 bis 3 ist) ;
eine Komponente (C): 1 bis 10 Massenteile eines nichtionischen Tensids;
eine Komponente (D): 1 bis 500 ppm eines platinbasierten Katalysators relativ zu der Menge der Komponente (A); und
eine Komponente (E): 30 bis 80 Massenteile Wasser, wobei der Gehalt der Methylgruppe in dem Feststoffgehalt in dieser Trennmittelzusammensetzung 5 Massen% oder mehr beträgt, wobei der Gehalt der Methylgruppe ein berechneter Wert basierend auf der Menge des verwendeten Rohmaterials der Zusammensetzung ist.

2. Öl-in-Wasser-Silikon-Emulsionszusammensetzung für eine Trennfolie eines mehrschichtigen Keramikkondensators (MLCC), eine Isolierfolie von Halbleiterzwischenschichten, eine Kondensatorfolie oder eine Wärmeleitfolie nach Anspruch 1, wobei die Zusammensetzung mittels eines Kits hergestellt wird, in dem mindestens zwei oder mehr der Komponenten (A) bis (D) in der Komponente (E) dispergiert sind.

3. Öl-in-Wasser-Silikon-Emulsionszusammensetzung für eine Trennfolie eines mehrschichtigen Keramikkondensators (MLCC), eine Isolierfolie von Halbleiterzwischenschichten, eine Kondensatorfolie oder eine Wärmeleitfolie nach Anspruch 1 oder 2, wobei die Öl-in-Wasser-Silikon-Emulsionszusammensetzung für eine Trennfolie auf eine Oberfläche einer Plastikfolie aufgebracht worden ist.

## Revendications

1. Composition d'émulsion de silicone huile-dans-eau pour un film de libération d'un condensateur céramique multicouche (MLCC), d'un film isolant intercouche semi-conducteur, d'un film de condensateur ou d'un film de conduction thermique, comprenant les composants (A) à (E) :
un composant (A) : 20 à 60 parties en masse d'une résine d'organopolysiloxane qui possède une formule de composition moyenne représentée par la formule générale (1), et contenant 1 à 5 % en moles d'un groupe alcényle lié à un atome de silicium, 10 à 90 % en moles d'un motif M représenté par la formule générale (2), 0 à 90 % en moles d'un motif T représenté par la formule générale (3), et 5 à 90 % en moles d'un motif Q représenté par la formule générale (4), et dans lequel un rapport molaire M/Q du motif M sur le motif Q est de 0,1 à 4 et un rapport molaire T/Q du motif T sur le motif Q est de 0 à 1 000, (une quantité en parties en masse étant représentée lorsque la masse totale de la composition est 100 parties en masse, et ci-après, la quantité de chaque composant est représentée de la même manière)
(formule chimique 1) R¹ₐR²_{b}SiO_{(4-a-b)/2} (1)
(R¹ étant le même groupe hydrocarboné monovalent ou un groupe hydrocarboné monovalent différent ne contenant pas de groupe insaturé aliphatique, R² étant un groupe alcényle, a étant 0,999 à 2,999, b étant 0,001 à 2, et a + b étant 1 à 3) 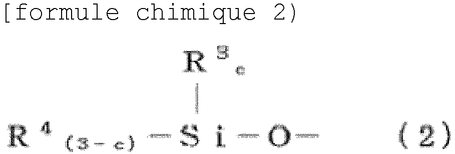 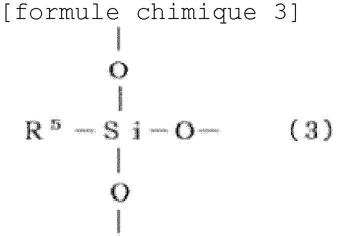 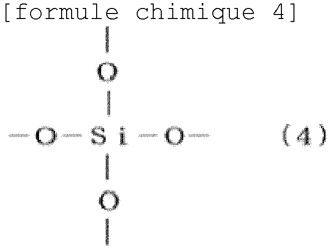 (R³ étant indépendamment un groupe hydrocarboné monovalent substitué ou non substitué possédant 1 à 20 atomes de carbone et aucune liaison insaturée aliphatique, R⁴ étant indépendamment un groupe alcényle substitué ou non substitué possédant 2 à 20 atomes de carbone, R⁵ étant un groupe alcényle substitué ou non substitué possédant 1 à 20 atomes de carbone, et c étant un entier de 0 à 3.) ;
un composant (B) : 5 à 30 parties en masse d'un organohydrogénopolysiloxane qui possède une formule de composition moyenne représentée par la formule générale (5), et contient deux atomes d'hydrogène ou plus liés à des atomes de silicium,
(formule chimique 5) R⁶_{d}HₑSiO_{(4-d-e)/2} (5)
(R⁶ étant le même groupe hydrocarboné monovalent ou un groupe hydrocarboné monovalent différent ne contenant pas de groupe insaturé aliphatique, d étant 0,999 à 2,999, e étant 0,001 à 2, et d + e étant 1 à 3) ;
un composant (C) : 1 à 10 parties en masse d'un tensioactif non ionique ;
un composant (D) : 1 à 500 ppm d'un catalyseur à base de platine par rapport à la quantité du composant (A) ; et
un composant (E) : 30 à 80 parties en masse d'eau,
la teneur du groupe méthyle dans la teneur en solides dans cette composition d'agent de libération étant de 5 % en masse ou plus,
la teneur du groupe méthyle étant une valeur calculée sur la base de la quantité de matière première utilisée de la composition.

2. Composition d'émulsion de silicone huile-dans-eau pour un film de libération d'un condensateur céramique multicouche (MLCC), d'un film isolant intercouche semi-conducteur, d'un film de condensateur ou d'un film de conduction thermique, selon la revendication 1, la composition étant préparée par un kit dans lequel au moins deux des composants (A) à (D) ou plus sont dispersés dans le composant (E).

3. Composition d'émulsion de silicone huile-dans-eau pour un film de libération d'un condensateur céramique multicouche (MLCC), d'un film isolant intercouche semi-conducteur, d'un film de condensateur ou d'un film de conduction thermique, selon la revendication 1 ou 2, la composition d'émulsion de silicone huile-dans-eau pour un film de libération ayant été appliquée sur une surface d'un film de matière plastique.
